# EUROPEAN PATENT SPECIFICATION

(11) **EP 1 689 673 B1**
(45) Date of publication and mention of the grant of the patent: **12.08.2020**
(21) Application number: 04798874.6
(22) Date of filing: 16.11.2004
(51) Int. Cl.: C01B 17/04, B01D 53/86

(54) **PROCESS FOR THE RECOVERY OF SULPHUR FROM GASEOUS STREAMS CONTAINING HYDROGEN SULPHIDE**
VERFAHREN ZUR GEWINNUNG VON SCHWEFEL AUS SCHWEFELWASSERSTOFF ENTHALTENDEN GASSTRÖMEN
PROCEDE POUR L'OBTENTION DE SOUFRE A PARTIR DE COURANTS GAZEUX CONTENANT DU SULFURE D'HYDROGENE

(30) Priority: 18.11.2003 IT MI20032245
(43) Date of publication of application: 16.08.2006
(73) Proprietor: Siirtec-Nigi S.P.A., 20148 Milano (IT)
(72) Inventor: BESTETTI, Adalberto, I-22070 Guanzate (IT)
(74) Representative: Pipparelli, Claudio
(86) International application number: PCT/IB2004/003745
(87) International publication number: WO 2005/049487

(56) References cited:
- WO-A1-02/20138
- IT-B- 1 203 898
- US-A- 4 038 036
- PLANTS C: "KEEPING ABREAST OF THE REGULATIONS" SULPHUR, THE BRITISH SULPHUR CO., LONDON, GB, no. 231, 1 March 1994 (1994-03-01), pages 35-36,38, XP000434872 ISSN: 0039-4890
- HEISEL M ET AL: "CLINSULF -DO ZUR SCHWEFELRUCKGEWINNUNG AUS H2S-HALTIGEM GAS" LINDE BERICHTE AUS TECHNIK UND WISSENSCHAFT, LINDE AG. WIESBADEN, DE, no. 70, January 1993 (1993-01), pages 15-19, XP000439152 ISSN: 0942-332X

## Description

### Short description of the invention

The present invention relates to a process for the recovery of sulphur from gaseous streams containing hydrogen sulphide, that consists of two combustion steps according to claim 1. The process of the invention, although it can be usefully employed for gaseous streams with any amount of hydrogen sulphide, is particularly suitable for gaseous streams with low contents of hydrogen sulphide.

Particularly important is the fact that the process of the invention is suitable to be used either in new construction or in already existing plants.

### State of the art

The removal of hydrogen sulphide and of other pollutants contained in the exhaust gas originating in several industrial processes, like oil refining, solid fuel gasification and natural gas conditioning, is necessary to satisfy the more and more restrictive regulations regarding atmospheric pollution from highly toxic compounds.

The hydrogen sulphide, accompanied by other compounds, is removed from the exhaust gas and, usually, sent to a sulphur recovery plant, wherein most of the hydrogen sulphide is reduced to elementary sulphur, while the other components are, usually, thermically destroyed. The most well known and commercial process for the sulphur recovery from exhaust gases containing hydrogen sulphide is the so-called Claus process. This process, which has been continuously improved over the years, still remains the most used and the most economic for quantitatively recovering sulphur, in a form also qualitatively scalable, from gaseous streams containing hydrogen sulphide. The main chemical reactions, which occur in the Claus process, are the following:

H₂S + 3/2 O₂ ←₋₋₋₋→ SO₂ + H₂O (1)

2H₂S + SO₂ ←₋₋₋₋→ 3/n Sₙ + 2H₂O (2)

which, combined, give rise to the total reaction:

H₂S + ½ O₂ ←₋₋₋₋→ 1/n Sₙ + H₂O (3)

The oxidation reaction (1) and reaction (2) are both exothermic. Contemporaneously to them, other oxidation, reduction and dissociation reactions occur. Particularly, the reactions between oxygen, hydrogen sulphide, and carbonyl sulphide and bisulphide, nitrogen, hydrogen, ammonia, phenols, hydrocarbons and other pollutants occur. Air, oxygen or a mixture thereof can be used as the oxidizing means for the formation of sulphur dioxide according to reaction (1). The Claus process usually consists of a thermal stage and one or more catalytic stages and is able to reach a recovery efficiency between 93 and 97.5% of the total sulphur contained in the gaseous feed stream to the thermal stage. Generally, the regulations for environment protection require recovery efficiencies higher than those reachable with a plant based on the Claus process. In order to comply to these requirements it is therefore necessary to provide a tail gas treating unit downstream the Claus plant to abate the pollutant compounds still present therein, mainly consisting of sulphur dioxide and other sulphur compounds.

In order to increase the sulphur recovery efficiency, it is known the necessity to perform the catalytic hydrogenation of the residual compounds contained in the gaseous stream, coming from the last catalytic stage of the Claus process, to obtain hydrogen sulphide which is, subsequently, oxidized to elementary sulphur.

Said catalytic hydrogenation occurs, generally, using hydrogen coming from a unit external to the plant or, in some specific cases, using the reducing gases produced in the plant itself by a reducing gas generator.

Examples of the use of reducing gases produced in the plant by means of a sub-stoichiometric combustion and/or introduction of hydrogen and/or other reducing compounds, are represented in the Beavon process, described in the United States Patent n° 4,055,401 and in the Scot process described in the United States Patent n° 3,985,861.

A drawback of said processes is represented by the fact that an anomaly, if any, in the sub-stoichiometric combustion systems for the production of hydrogen or other reducing gas, would lead to the carbon black formation and/or an unsatisfied performance of the hydrogenation reaction with consequent pollution of the reduction catalyst and therefore break-through of sulphur and sulphur dioxide directly downstream the hydrogenation reactor, because the conversion of sulphur dioxide and sulphur to hydrogen sulphide does not take place. This anomaly therefore directly involves the processes downstream the hydrogenation reactor causing problems due to foulness and/or chemical degradation of the reagents or poisoning of the catalysts. An example of a process that does not require an external dedicated production of hydrogen or other reducing agent, is the HCR process, described in the Italian patent n° 1 203 898, which is based on minimizing the sulphur dioxide content in the tail gas of the Claus plant, so that the hydrogen produced in the thermal reactor is sufficient to perform the hydrogenation. The above mentioned processes foresee furthermore the condensation and removal of excess water and the extraction of the hydrogen sulphide by absorption in a suitable solvent and subsequent regeneration of the same, with recycling of the hydrogen sulphide to the thermal reactor of the Claus plant. The above mentioned processes are all able to provide a sulphur recovery efficiency, contained in the acid feed gas, that can be higher than 99.5% and close to 99.9%. Examples of catalytic reduction by using reducing gases are represented by the Beavon/Selectox, EuroClaus and SuperClaus processes. In said processes the hydrogen sulphide which is formed is subsequently catalytically oxidized to elementary sulphur. The catalytic oxidation performed on the hydrogen sulphide, obtained in the previous hydrogenation reaction, can be performed either after the removal of the excess water contained in the gaseous stream (Beavon/Selectox process) or, directly, without water removal (EuroClaus and SuperClaus processes). Both the above catalytic stages of hydrogenation and oxidation, which make it possible to obtain recovery efficiency of the sulphur contained in the acid feed gas up to 99.5%, are performed in dedicated reactors located downstream the Claus plant or, sometimes, inside the last Claus reactor. A drawback presented by said processes is represented by the fact that they are not suitable to be used with gases low in hydrogen sulphide concentration; if applied on a gas containing less than 25% by volume of hydrogen sulphide, they would not reach acceptable recovery values. The reaction that promotes the sulphur recovery and the hydrogen formation, usable in the hydrogenation stage downstream the Claus plant, is the dissociation of the hydrogen sulphide, which increases as the temperature of the combustion chamber rises and is represented by the reaction:

H₂S ←₋₋₋₋→ H₂ + S (4)

Other reactions which can occur in the Claus process combustion chamber generating hydrogen are represented by:

CH₄ + H₂O ←₋₋₋₋→ CO + 3H₂ (5)

CO + H₂O←₋₋₋₋→ CO₂ + H₂ (6)

In the catalytic hydrogenation reactor the reactions (7) and (8) may occur and, in addition to them, in the same hydrogenation conditions, the above mentioned reaction (6) can take place.

SO₂ + 3H₂ ←₋₋₋₋→ H₂S + 2H₂O (7)

S + H₂ ←₋₋₋₋→ H₂S (8)

In any case it is preferable that the gaseous stream coming from the last Claus stage has a hydrogen sulphide content and a sulphur dioxide content with respective molar ratio (H₂S : SO₂) equal to or higher than 2.

In sweetening processes of natural gas, the obtained acid gases contain little hydrogen sulphide. With said gases several problems may occur in the Claus process and in the subsequent hydrogenation stage, such as:
1) how to obtain a steady flame and a thermal gradient with a high reaction temperature;
2) how to assure and adequate hydrogen feed to the catalytic hydrogenation reactor.

To solve the problem in point 1), some solutions are foreseen, such as, for example:
- a portion of the acid fed gas flow bypasses the thermal reactor so as to allow a steady flame and a suitable temperature in the combustion chamber. Alternatives of this configuration foresee the subdivision of the thermal reactor in two separate zones and
- heating of the acid gas and/or of the combustion air;
- subdivision of the acid gas flow rate, with fuel gas support;
- recycling to the burner of a portion of the produced sulphur.

Up until now, to solve the problem in point 2), regarding the availability of hydrogen during the hydrogenation stage, has been used the hydrogen generation method by means of a dedicated combustion unit, known as Reducing Gas Generator (RGG) like in the above mentioned Beavon and Scot processes. The alternative to RGG would be that of a direct, feed of the hydrogen into the hydrogenation reactor from an external production unit to the Claus process. The system could consist of a cylinders package or a cryogenic evaporator or, also, an import system from a hydrogen production plant. These alternatives, although technically acceptable, have the drawback of requiring very high investment and operational costs.

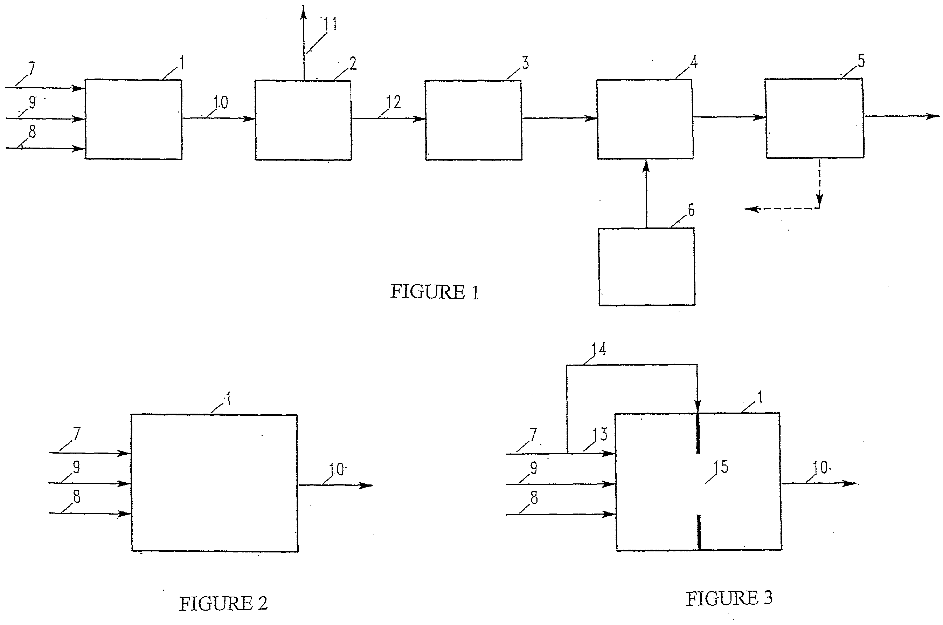

In Figure 1 a block diagram is shown regarding a known process for the recovery of sulphur from gaseous streams containing hydrogen sulphide, wherein the combustion chamber or Claus thermal reactor 1, the heat recovery boiler 2, one or more catalytic and sulphur condensation stages 3, the hydrogenation stage 4, the hydrogen sulphide removal stage and recycle 5 or the direct oxidation stage 5 and the hydrogen production unit 6 are illustrated.

In Figure 2 a simplified flow sheet of the thermal reactor 1 of the "single zone" Claus process is shown: said configuration is used in a very large number of Claus plants which treat acid gases rich in hydrogen sulphide and usually present in the majority of refineries. In this configuration, the gas rich in hydrogen sulphide 7 is burnt with air, oxygen or mixtures thereof 8. The fuel gas 9 may be added in the case of supported combustion, but usually, when the acid gases are rich in hydrogen sulphide, this option is not used. After a sufficient residence time for the Claus reaction to occur, the combustion products 10 are usually cooled in the waste-heat-boiler 2 wherein the burnt gas heat is released for the steam production 11. The process gas 12, containing the sulphur formed as per the Claus reaction, is then routed to the subsequent condensation and catalytic reaction stages 3 of the Claus process.

Figure 3 shows a simplified flow sheet of the "double zone" thermal reactor 1, commonly used in the Claus plants. This flow sheet is suitable for the treatment of acid gases with a moderate content of hydrogen sulphide and/or ammonia. In this flow sheet the hydrogen sulphide containing gas 7 is divided into two portions: one portion 13 is burnt with air, oxygen enriched air or even pure oxygen 8 in the burner on the front of the thermal reactor 1. The fuel gas 9 can be used as support for a correct and stable combustion. The remaining gas portion 14 is instead routed to a second zone of the thermal reactor 1, wherein it is mixed with the combustion products of the first zone and the resulting mixture 15 proceeds to react for a sufficient available residence time. The reaction products 10 are then cooled in the waste-heat-boiler 2 with steam production 11. The process gases 12 containing the produced sulphur, formed in the Claus reaction, are then sent to the subsequent condensation and catalytic reaction stages 3 of the Claus process. This system allows to treat gases with a moderate content of hydrogen sulphide and/or ammonia, because it is able to maintain stable combustion conditions and such temperatures as to promote the Claus reaction and the ammonia destruction in the first zone of the thermal reactor 1.

Both the cases shown in Figures 2 and 3 have an intrinsic hydrogen production according to the reactions (4), (5) and (6) ; this has proved to be adequate for the hydrogenation stage 4 of the Claus process tail gases, when the Claus process is performed according to the above mentioned HCR process. The reduced gases that are instead routed to a selective oxidation in the stage 5, as for the Beavon/Selectox process, need hydrogen generation, while those routed to a selective oxidation, as for the EuroClaus or SuperClaus process, do not need an additional hydrogen production. In the case of treatment of acid gases very poor in hydrogen sulphide, the intrinsic production of reducing gas, occurring in the thermal reactor 1, is not sufficient to conduct the hydrogenation reaction of the sulphur products, particularly sulphur dioxide, to hydrogen sulphide in the processes which require the treatment of the Claus plant tail gases.

WO 0220138 discloses a process for recovering sulphur from a gas stream containing hydrogen sulphide. Oxygen or oxygen-enriched air is employed to support combustion in a furnace (16) of part of the hydrogen sulphide content of a first feed gas stream. Sulphur is extracted from the resulting gas stream in a sulphur condenser (26). Catalyst Claus reaction between hydrogen sulphide and sulphur dioxide in the resulting sulphur vapour depleted gas stream takes place in a catalytic reactor (32). Sulphur is extracted in a further sulphur condenser (34). The resulting sulphur vapour depleted gas stream is passed into a catalytic reduction reactor (40) in which all the residual sulphur dioxide and any sulphur vapour are reduced to hydrogen sulphide. The resulting reduced gas mixture has water vapour extracted there from in a quench tower (52). The resulting water vapour depleted gas stream flows to a Claus plant for further treatment typically together with a second feed gas stream. Employing the catalytic Claus reactor (32) facilitates achievement of complete reduction of sulphur dioxide to hydrogen sulphide in the catalytic reactor (40) and therefore makes it possible to obtain high overall conversions of hydrogen sulphide to sulphur.

During the discussion of the prior art, WO 0220138 says that *"by using pure oxygen (or air highly enriched in oxygen) the size of the initial furnace may be kept down. However, the advantages in size reduction of the initial furnace made possible by the use of pure oxygen (or oxygen highly enriched in air) as the oxidant are counteracted to some extent by the recycle of the gas to the furnace".* Later on, WO 0220138 concludes the discussion relating to the prior art, saying that *"It is an aim of the method according to the invention to provide an alternative solution to this problem which does not necessitate a recycle* " .

Said method disclosed by WO 0220138 is a combustion process (see claim 1, point (g)) *"wherein a gas containing at least 40% by volume of oxygen molecules is employed as oxidant in step (a)".* Therefore the technical problem of WO 0220138 is how to avoid the recycle of the gas disclosed in the prior art. This problem is solved by WO 0220138 using a high concentration of oxygen; nothing to do with the technical problem solved by the present Application, the aim of which is to produce reducing gases necessary for the sulphur compounds hydrogenation, particularly sulphur dioxide, which are present in the Claus process tail gases. According to the present invention, said reducing gases are produced in the thermal reactor of said process and retained till their use in the hydrogenation stage.

### Description of the invention

The object of the present invention consists of a process for the sulphur recovery from gaseous streams, which can also have particularly low contents of hydrogen sulphide, wherein the reducing gases necessary for the sulphur compound hydrogenation, particularly sulphur dioxide, which are present in the Claus process tail gases, are produced in the thermal reactor of said process and retained till their use in the hydrogenation stage.

Said process is equally suitable to be used for the sulphur recovery from gaseous streams rich in hydrogen sulphide: more properly, it has a valid application in gaseous streams with a hydrogen sulphide content from 5 to 30% by volume.

More particularly the production of the reducing gases occurs by reaction, preferably in the presence of steam, of the gaseous stream, containing hydrogen sulphide and other pollutant substances, with air, oxygen or a mixture thereof, in sub-stoichiometric quantities, in the presence of suitable fuel quantities, at high temperature, equal to or higher than 950 °C. The quantity of the reducing gases, hydrogen and carbon monoxide, which is formed together with other reactions, is retained in the plant up to the hydrogenation stage and has shown to be in sufficient quantities to perform the complete reduction of sulphur compounds, particularly sulphur dioxide, contained in the Claus plant tail gases.

The additional steam has the function of avoiding the formation of carbon black, of controlling the combustion temperature and of increasing the production of the reducing agents, hydrogen and carbon monoxide.

The present invention has the further purpose of describing a Claus thermal reactor by whose application it is possible to overcome the above mentioned drawbacks.

Said thermal reactor is essentially formed by two separate zones. The gaseous stream containing hydrogen sulphide, the fuel and the air or oxygen or mixtures thereof, are distributed, with suitable residence times and temperatures, between the two zones in such a way that in the first zone oxygen is lacking and high formation of reducing compounds, like hydrogen and carbon monoxide, is present, according to the reactions (4), (5) and (6) and, in the second zone, where the Claus reaction (2) principally takes place, said reducing compounds are essentially retained. The process of the present invention permits obtaining reducing gases in a quantity higher than that produced by the traditional methods and consequently additional units of reducing gas generation and/or feed from outside the Claus process, are no longer necessary. This improvement leads to a marked reduction in investment and operational costs, due not only to the elimination of a critical unit like RGG, but also, and especially, to the consequent increase in sulphur production with fewer unscheduled shutdowns and less necessary maintenance; all these factors together improve the stream factor of the plant. The last characteristic, relevant to the stream factor, is today absolutely important, especially for a plant like the Claus one which is dedicated for reducing atmospheric gaseous emissions and therefore protecting the environment.

Furthermore, the production of the reducing agents, hydrogen and carbon monoxide, which is directly performed in the Claus process combustion chamber and the retention of the obtained reducing gases in the hydrogenation stage up until their use, means that the gas quantity to be treated remains unaltered as there is no increase caused by additional fuel gas or by air introduced through the RGG unit.

In the attached Figures some preferred embodiments of the apparatus used in the present invention are shown. The reference numbers correspond to same meanings throughout the text.

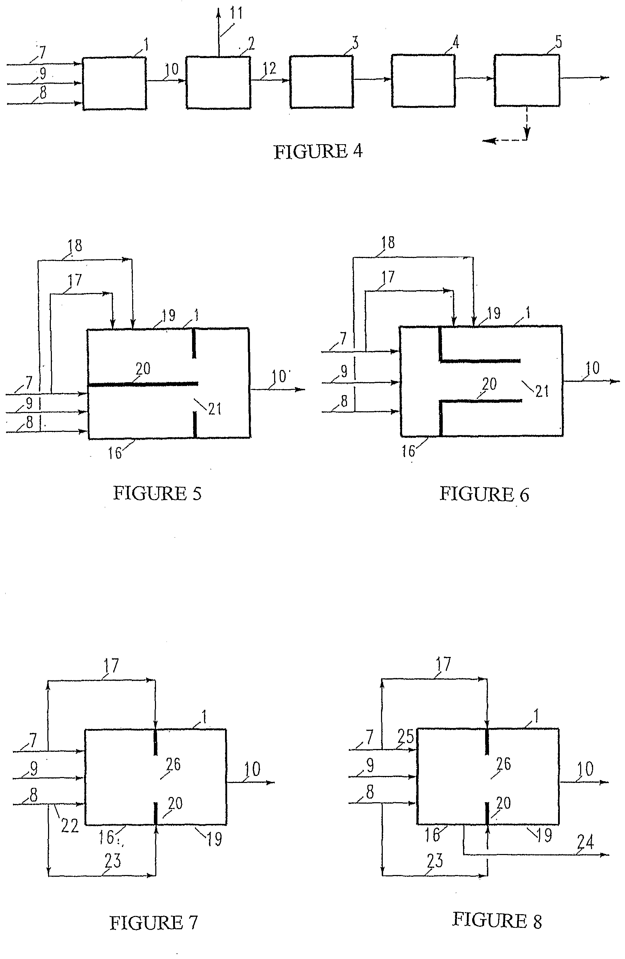

Figure 4 represents a block diagram of the process of the invention wherein the absence of the hydrogen production unit 6, compared to Figure 1, is evident.

Figures 5, 6, 7 and 8 represent different embodiments of the thermal reactor or combustion chamber used in the present invention. Particularly, in the thermal reactor shown in the schematic drawing of Figure 5, defined "with parallel twin chambers" the fuel gas 9 is burnt, in slightly sub-stoichiometric conditions, in the combustion zone 16 with air, oxygen or mixtures thereof 8 until appropriate temperature and flame stability are obtained and a suitable steam quantity is added. The gaseous stream low in hydrogen sulphide 7 is routed, optionally and partially, to chamber 16 and, partially or totally 17, together with air, oxygen or residual mixtures thereof 18, to zone 19 wherein it reacts in sub-stoichiometric conditions. Zones 16 and 19 are separated from each other by a wall 20, not necessarily flat, built with high density refractory bricks. In the wall 20 some dedicated slots transfer the heat from zone 16 to zone 19.

In the combustion chamber shown in the schematic drawing of Figure 6 defined "with co-axial twin chambers", the feed to the various parts of the apparatus exactly reflects the operations performed in the Figure 5 embodiment with the only difference that in the present embodiment the chambers 16 and 19 are coaxial to each other. In this embodiment the wall 20 is practically cylindrical. In both the above embodiments, identifiable as "twin chambers thermal reactor", the environment formed in the zones 16 and 19 presents ideal conditions for the production of the reducing gases, hydrogen and carbon monoxide. The process gases coming from the zones 16 and 19 are mixed in the zone 21 before being cooled in the waste heat boiler 2 wherein steam 11 is produced or they are kept separated also in the waste heat boiler 2 and mixed at the outlet of the same. The process gas 12 containing sulphur, produced in the Claus reaction, is routed to the subsequent Claus condensation and catalytic reaction stages 3. These "twin chambers thermal reactor" permit, due to the two combustion 16 and Claus 19 separated zones, well maintaining the levels of the produced reducing gases, hydrogen and carbon monoxide, as said two agents are not involved in the Claus reaction chemism where oxygen is present.

The further thermal exchanges of the reaction products assure the reaction completion in favour of the production of the reducing agents, blocking also any unwanted reactions, and a subsequent retention of the reducing agents in the process gas and therefore favouring their availability for the subsequent hydrogenation stage downstream the Claus process.

In a further embodiment of the thermal reactor used in the present invention, named "combustion air splitting" whose schematic representation is shown in Figure 7, said thermal reactor 1 is divided into two zones placed in series and separated by a vertical wall 20, provided with a suitable opening 26 for the gas passage from one zone to the other: zone 16 wherein the formation of the reducing gas occurs and zone 19 wherein the Claus reaction takes place. The fuel gas 9 is burnt, in the zone 16 wherein it is preferable to have also steam, with air, oxygen or mixtures thereof 22 in sub-stoichiometric conditions in order to obtain a good flame stability and a temperature suitable for the production of the reducing gases. The acid process gas, low in hydrogen sulphide 7, is partially or totally routed, via 17, to the second zone 19. The flow of combustion air, oxygen or mixtures thereof 8 is divided and a portion thereof 23 is injected into the second zone 19 thus providing the oxygen necessary for the partial oxidation to sulphur dioxide of the hydrogen sulphide contained in the acid gas 17 and then it proceeds to the Claus reaction. The air flow portion 22 provides in zone 16 the necessary conditions for the production and retention of the reducing gases. The process gas 10 is then cooled, in the waste heat boiler 2, to process gas 12 with steam production 11 and afterwards routed to the condensation and catalytic reaction stages 3 for the separation of the sulphur formed in the Claus process.

In said embodiment, because a portion of the combustion air can go round the thermal reactor, the reaction stoichiometry control is rendered simpler and easier. The process gas produced in the first zone, as it contains an adequate hydrogen and carbon monoxide quantity for the tail gas treatment, competes with the acid gas for the consumption of oxygen injected in the second zone. Although this embodiment can lead to a lower production level of reducing gases, if compared with the embodiments of Figures 5 and 6, it guarantees a production level higher than that of the conventional thermal reactor of Figure 3. According to the characteristics of the acid gas to be treated, the "combustion air splitting" embodiment in Figure 7, can in any case be considered sufficient and of easier execution than the one of the "twin chambers thermal reactor" in Figures 5 and 6. In particular, the "combustion air splitting" embodiment can be economically more advantageous for the production of the reducing gases compared to "twin chambers thermal reactor", especially when its industrial embodiment regards already executed projects or, even, already existing plants.

Laboratory performed experiments have shown that the concentration level of the reducing agents, hydrogen and carbon monoxide, present in the process gas that leaves the thermal "combustion air splitting" reactor, is remarkably higher than the concentration level measured in the process gas that leaves the thermal reactor with conventional combustion and the support of fuel gas. In the embodiment shown in Figure 8, the acid gas 7 is partially oxidized, in the presence of fuel gas 9, which is burnt with air, oxygen or mixtures thereof 8 thus determining a zone with sufficiently high temperature. The reaction is carried out, preferably in the presence of steam, in the combustion zone 16 in sub-stoichiometric conditions suitable to determine a good flame stability and a favourable temperature for the production of the reducing gases. A flow of hot reducing gases 24 is then withdrawn from the zone 16 of the thermal reactor 1 and routed to a cold Claus plant zone. The acid gas low in hydrogen sulphide 7 is divided: a portion 25 is burnt in the chamber 16, while the remaining portion 17 enters the second zone 19.

Alternately to said embodiment, the acid gas 7 can be totally routed to the second zone 19. Also a portion of the combustion air 23 can be routed to the second zone 19 to obtain the necessary reducing conditions in the first zone 16. The process gases 10 out-flowing from zone 19, are cooled in the waste heat boiler 2 wherein steam 11 is produced. The process gas 12, containing the sulphur formed in the Claus reaction, is then routed to the Claus process condensation and catalytic reaction stages 3.

In this, embodiment, a portion of the reducing gas 24, produced in the first zone 16, goes completely round the second zone 19 of the thermal reactor 1, maintaining its reducing characteristics and its chemical composition.

Sending this reducing gas portion to a section of Claus plant 3, wherein it can be mixed with a cold stream like, for example, at the first condenser entrance, permits its chemical composition to remain unchanged.

### Example

Sulphur recovery from natural gas purification is described. The obtained acid gas which is fed to the Claus plant has the following molar composition:

| Component | molar % |
|---|---|
| H₂S | 18 |
| CO₂ | 76 |
| CH₄ | 1 |
| H₂O | 5 |

The plant capacity is 100 tons per day as recovered sulphur with an efficiency higher than 99.5% referred to the entrance sulphur content.

The Claus process was designed using the present state of the art, i.e. treating the gas having the above mentioned composition by the use of fuel gas (available natural gas) as combustion support to reach a flame stability and a reaction temperature of 950 °C.

In order to reach a sulphur recovery efficiency higher than 99.5% the plant was provided with a tail gas treatment Scot like unit which includes: 1) a hydrogenation stage of the sulphur residual compounds; 2) subsequent absorption in a solvent of the generated hydrogen sulphide; 3) hydrogen sulphide recovery and recycling to the Claus plant thermal reactor. The plant was furthermore provided with an external unit for the hydrogen supply. The sulphur recovery efficiency was increased to 99.8%. With feed of the same acid gas the sulphur recovery was performed using the process and the apparatus according to the present invention, particularly the embodiment with the thermal "Combustion air splitting" reactor.

The obtained results permitted to evaluate a saving of investment costs of about 10% as well as a saving of the operational costs valued in around Euro 110,000.00/year and a plant simplification and flexibility with consequent expected prolongation of its average life.

## Claims

1. A process for the recovery of sulphur from gaseous stream containing hydrogen sulphide in a percentage of from 5 to 30% by volume, that consists of:
1) two combustion steps carried out in two separate zones of a Claus thermal reactor on the gaseous stream containing hydrogen sulphide, a fuel and air and/or oxygen, said gaseous stream being distributed between the two zones in such a way that in the first zone oxygen is lacking, wherein
1 a) the first combustion step, made in the first zone at a temperature equal or higher than 950°C, is a partial combustion of the gaseous stream containing hydrogen sulphide to promote the formation and the retention of reducing compounds, like hydrogen and carbon monoxide, the production of the reducing compounds occurring by reaction of the gaseous stream containing hydrogen sulphide and other pollutant substances, with a sub-stoichiometric quantity of air and/or oxygen, in the presence of suitable fuel quantities, according to the reactions (4), (5) and (6),
H₂S ←₋₋₋₋₋₋₋₋→ H₂ + S (4)
CH₄ + H₂O ←₋₋₋₋₋₋₋→ CO + 3 H₂O (5)
CO + H₂O ←₋₋₋₋₋₋→ CO₂ + H₂ (6)
1b) the second combustion step, made in the second zone, is a combustion of the gaseous stream containing hydrogen sulphide, according to reaction (1)
H₂S + 3/2 O₂ ←₋₋₋→ SO₂ + H₂O (1),
2) one or more catalytic stages, according to the Claus process, wherein the hydrogen sulphide and the sulphur dioxide present in the gas obtained in the previous stage react according to the Claus reactions (1) and (2)
H₂S + 3/2 SO₂ ←₋₋₋→ SO₂ + H₂O (1),
2H₂S + SO₂ ←₋₋₋₋₋→ 2H₂O + 3/n Sₙ (2)
3) a catalytic stage wherein the sulphur compounds contained in the Claus process tail gas, coming in contact with the reducing gases formed in the initial stage of partial combustion of the process, are reduced to hydrogen sulphide according to the reaction (7) and (8)
SO₂ + 3H₂ ←₋₋₋₋→ H₂S + 2H₂O (7)
S + H₂ ←₋₋₋₋→ H₂S (8)

2. The process according to claim 1, wherein the gaseous stream coming from the last Claus stage has a hydrogen sulphide content and a sulphur dioxide content with respective molar ratio (H₂S : SO₂) equal or higher than 2.

3. The presence according to claim 1, wherein the production of reducing compounds occurs in presence of steam.

## Patentansprüche

1. Ein Verfahren für die Rückgewinnung von Schwefel aus einem Gasstrom, welcher Schwefelwasserstoff in einem Verhältnis von 5 bis 30% Volumenprozent enthält, das aus folgendem besteht:
1) zwei Verbrennungschritten, welche in zwei getrennten Bereichen eines Claus-Thermoreaktors am Gasstrom durchgeführt werden, der Schwefelwasserstoff enthält, einen Treibstoff und Luft und/oder Sauerstoff, wobei der genannte Gasstrom jeweils zwischen den beiden Bereichen verteilt wird, und zwar so, dass in dem ersten Bereich Sauerstoff fehlt, wobei
1 a) der erste Verbrennungsschritt, der in dem ersten Bereich bei einer Temperatur erfolgt, die 950°C entspricht oder überschreitet, eine teilweise Verbrennung des Gasstroms ist, der Schwefelwasserstoff enthält, um die Bildung und Retention reduzierender Verbindungen wie Wasserstoff und Kohlenmonoxyd zu fördern, wobei die Herstellung der reduzierenden Verbindungen jeweils durch Reaktion des Gasstroms stattfindet, welcher Schwefelwasserstoff und andere Schadstoffe enthält, mit einer substöchiometrischen Menge an Luft und/oder Sauerstoff und bei Vorhandensein entsprechender Treibstoffmengen, gemäß den Reaktionen (4), (5) und (6),
H₂S ←₋₋₋₋₋₋₋₋→ H₂ + S (4)
CH₄ + H₂O ←₋₋₋₋₋₋₋→ CO + 3 H₂O (5)
CO + H₂O ←₋₋₋₋₋₋→ CO₂ + H₂ (6)
1b) und der zweite Verbrennungsschritt, der in dem zweiten Bereich erfolgt, eine Verbrennung des Gasstroms ist, welcher Schwefelwasserstoff enthält, gemäß Reaktion (1)
H₂S + 3/2 O₂ ←₋₋₋→ SO₂ + H₂O (1),
2) einem oder mehreren Katalysestufen gemäß dem Claus-Verfahren, wobei der Schwefelwasserstoff und das Schwefeldioxyd, die in dem in dem vorausgegangenen Schritt gewonnenen Gas enthalten sind, jeweils gemäß den Claus-Reaktionen (1) und (2) reagieren
H₂S + 3/2 O₂ ←₋₋₋→ SO₂ + H₂O (1),
2H₂S + SO₂ ←₋₋₋₋₋→ 2H₂O + 3/n Sₙ (2)
3) einer Katalysestufe, bei der die Schwefelverbindungen, welche in dem Clausverfahren-Endgas enthalten sind, dadurch, dass sie mit den reduzierenden Gasen in Berührung kommen, die sich im Anfangsstadium der teilweisen Verbrennung des Verfahrens bilden, jeweils gemäß den Reaktionen (7) und (8) zu Schwefelwasserstoff reduziert werden.
SO₂ + 3H₂ ←₋₋₋₋→ H₂S + 2H₂O (7)
S + H₂ ←₋₋₋₋→ H₂S (8)

2. Das Verfahren gemäß Anspruch 1, bei dem der Gasstrom, der von der letzten Claus-Stufe kommt, einen Schwefelwasserstoff- und Schwefeldioxydgehalt mit einem jeweiligen Molverhältnis (H₂S : SO₂) aufweist, das 2 entspricht oder überschreitet.

3. Das Vorhandensein gemäß Anspruch 1, wobei die Herstellung von reduzierenden Verbindungen bei Mitwirkung von Dampf erfolgt.

## Revendications

1. Procédé pour la récupération de soufre à partir de flux gazeux contenant du sulfure d'hydrogène en pourcentage allant de 5 à 30% en volume, qui consiste en :
1) deux étapes de combustion réalisées dans deux zones séparées d'un réacteur thermique Claus sur le flux gazeux contenant du sulfure d'hydrogène, un combustible et de l'air et/ou de l'oxygène, ledit flux gazeux étant distribué entre les deux zones de façon à ce que dans la première zone il manque de l'oxygène, où
1 a) la première étape de combustion, réalisée dans la première zone à une température égale ou supérieure à 950°C, est une combustion partielle du flux gazeux contenant du sulfure d'hydrogène pour promouvoir la formation et la rétention de composés réducteurs, comme de l'hydrogène et du monoxyde de carbone, la production des composés réducteurs se produisant par réaction du flux gazeux contenant du sulfure d'hydrogène et d'autres substances polluantes, avec une quantité substoechiométrique d'air et/ou d'oxygène, en présence de quantités appropriées de combustible, selon les réactions (4), (5) et (6),
H₂S ←₋₋₋₋₋₋₋₋→ H₂ + S (4)
CH₄ + H₂O ←₋₋₋₋₋₋₋→ CO + 3 H₂O (5)
CO + H₂O ←₋₋₋₋₋₋→ CO₂ + H₂ (6)
1 b) la seconde étape de combustion, réalisée dans la seconde zone, est une combustion de flux gazeux contenant du sulfure d'hydrogène, selon la réaction (1)
H₂S + 3/2 O₂ ←₋₋₋→ SO₂ + H₂O (1),
2) une ou plusieurs étapes catalytiques, selon le procédé de Claus, où le sulfure d'hydrogène et le dioxyde de soufre présents dans le gaz obtenu dans l'étape précédente réagissent selon les réactions de Claus (1) et (2)
H₂S + 3/2 O₂ ←₋₋₋→ SO₂ + H₂O (1),
2H₂S + SO₂ ←₋₋₋₋₋→ 2H₂O + 3/n Sₙ (2)
3) une étape catalytique où les composés sulfurés contenus dans le gaz résiduel du procédé de Claus, venant en contact avec les gaz réducteurs formés dans l'étape initiale de combustion partielle du procédé, sont réduits à du sulfure d'hydrogène selon les réactions (7) et (8)
SO₂ + 3H₂ ←₋₋₋₋→ H₂S + 2H₂O (7)
S + H₂ ←₋₋₋₋→ H₂S (8)

2. Procédé selon la revendication 1, où le flux gazeux venant de la dernière étape de Claus a une teneur en sulfure d'hydrogène et une teneur en dioxyde de soufre avec un rapport molaire respectif (H₂S : SO₂) égal ou supérieur à 2.

3. La présence selon la revendication 1, où la production de composés réducteurs se produit en présence de flux.
